# EUROPÄISCHE PATENTANMELDUNG

(11) **EP 1 533 342 A2**
(43) Veröffentlichungstag der Anmeldung: **25.05.2005**
(21) Anmeldenummer: 04026511.8
(22) Anmeldetag: 09.11.2004
(51) Int. Cl.: C08L 75/00

(54) **Wasserverdünnbare Alkydharz-Zusammensetzungen**

(30) Priorität: 19.11.2003 AT 18602003
(71) Anmelder: Surface Specialties Austria GmbH, 8402 Werndorf (AT)
(72) Erfinder: Urbano, Edmund, Dr., 8044 Graz (AT); Supper, Ernst, 8054 Graz (AT); Krassnitzer, Manfred, 8010 Graz (AT); Grimm, Martin, 8062 Kumberg (AT)
(74) Vertreter: Deckers, Hellmuth, A., Dr.

(57) **Zusammenfassung**

Wasserverdünnbare Alkydharz-Zusammensetzung **AB,** enthaltend ein allein nicht wasserlösliches Urethanalkyd-Harz **A** mit einem Ölgehalt von weniger als 50 % und ein mit olefinisch ungesättigten Monomeren gepfropftes Alkydharz **B** als Trägerharz, wobei das Alkydharz **B** Bausteine enthält abgeleitet von linearen aliphatischen mindestens dreiwertigen Alkoholen **B5** und von cycloaliphatischen Dicarbonsäuren **B3** oder deren Anhydriden, Verfahren zu deren Herstellung und zur Herstellung von diese enthaltenden Emulsionen sowie deren Verwendung zur Herstellung von hochwertigen Beschichtungen

## Beschreibung

Die Erfindung betrifft wasserverdünnbare Alkydharz-Zusammensetzungen, sowie ein Verfahren zu deren Herstellung und deren Verwendung.

Aus der AT-B 369 774 sind Urethanalkydharz-Emulsionen bekannt, die ein wasserunlösliches Urethanalkyd mit niedriger Säurezahl und ein acrylmodifiziertes Trägerharz als Emulgator umfassen. Dabei ist ein Ölgehalt von ca. 50 % die untere Grenze, kürzerölige Alkydharze ließen sich bisher nicht in Wasser zu stabilen Emulsionen formulieren. Lacke, die mit diesen Harzen formuliert sind, zeigen jedoch keine ausreichende Schwitzwasserbeständigkeit.

In der AT-B 378 784 wird eine verbesserte Zusammensetzung beschrieben, in der die Komponenten Trägerharz und Urethanalkyd-Harz durch Umsetzen mit Düsocyanaten verknüpft sind. Derartige Zusammensetzungen sind jedoch schlechter emulgierbar.

Gemeinsam ist den beschriebenen Zusammensetzungen ihre langsame Trocknung und geringere Härte, bedingt durch den höheren Massenanteil an Öl von über 50 % und den für die Emulgierung erforderlichen Gehalt an Polyäthylenglykol.

Es besteht daher die Aufgabe, schneller trocknende Urethanalkydharze mit einem Ölgehalt von weniger als 50 % (Massenanteil von Ölen an der Masse der Urethanalkydharze) bereitzustellen, die ohne Schwierigkeiten in Wasser emulgierbar sind und in ihrer Schwitzwasserbeständigkeit und ihrer Härte gegenüber den aus dem Stand der Technik bekannten Harzen verbessert sind.

Die vorliegende Erfindung betrifft eine wasserverdünnbare Alkydharz-Zusammensetzung **AB,** enthaltend ein Urethanalkyd-Harz **A** mit einem Ölgehalt von weniger als 50 % und ein mit olefinisch ungesättigten Monomeren gepfropftes Alkydharz **B** als Trägerharz, wobei das Alkydharz **B** Bausteine enthält abgeleitet von linearen aliphatischen mindestens dreiwertigen Alkoholen **B5** und cycloaliphatischen Dicarbonsäuren **B3** oder deren Anhydriden. Dabei ist das Urethanalkyd-Harz **A** allein nicht wasserlöslich oder wasserverdünnbar. Das als Trägerharz bezeichnete Alkydharz B wirkt als polymerer Emulgator und bewirkt, daß die Mischung aus dem Urethanalkydharz A und dem gepfropften Alkydharz **B** wasserverdünnbar ist.

Unter wasserverdünnbar oder homogen emulgierbar wird hier verstanden, daß mit dem unbewaffneten Auge in der Emulsion oder Dispersion keine diskreten Teilchen oder Harztröpfchen wahrnehmbar sind, und daß die erhaltene Emulsion oder Dispersion auch nach 24 Stunden Lagerung bei Raumtemperatur keine Inhomogenität oder Absetzen zeigt.

Unter wasserlöslich wird hier verstanden, daß eine Lösung einer bestimmten Masse der Probe in der neunfachen Masse an Wasser ein klare Lösung oder Dispersion bildet, ohne eine mit dem bloßen Auge sichtbare Trübung oder einen sichtbaren unlöslichen Niederschlag; anderenfalls wird der betreffende Stoff oder das betreffende Kunstharz als wasserunlöslich bezeichnet.

Unter "nicht wasserlöslich" wird hier ein Stoff verstanden, bei dem nach Einstellung des Gleichgewichts mit der zehnfachen Masse an Wasser bei Raumtemperatur (20 °C) die wäßrige Phase einen Massenanteil von weniger als 0,5 % dieses Stoffes aufweist.

Bevorzugt enthält die Alkydharz-Zusammensetzung **AB** einen Massenanteil von 20 % bis 60 % des Alkydharzes **B** und 80 % bis 40 % des Urethanalkyd-Harzes **A.**

Das Trägerharz (Alkydharz) **B** enthält Bausteine abgeleitet von ungesättigten Fettsäuren **B1**, von einer Mischung von Acrylmonomeren **B2**, von cycloaliphatischen Dicarbonsäuren **B3** oder deren Anhydriden, gegebenenfalls von weiteren Fettsäuren **B4** sowie von mindestens dreiwertigen, bevorzugt mindestens vierwertigen linearen aliphatischen Alkoholen **B5**. Zur Herstellung des Trägerharzes wird bevorzugt so vorgegangen, daß in einer ersten Stufe die ungesättigten Fettsäuren **B1** mit den Acrylmonomeren **B2** in Gegenwart von Radikalinitiatoren umgesetzt werden, die derart gepfropften Fettsäuren werden dann in der zweiten Stufe mit den weiteren Säuren **B3** und **B4** und den Alkoholen **B5** verestert.

Geeignete Komponenten **B1** sind Fettsäuren mit 10 bis 40, bevorzugt 12 bis 30 Kohlenstoffatomen, die mindestens eine olefinische Doppelbindung aufweisen, wie Myristoleinsäure, Palmitoleinsäure, Petroselinsäure, Petroselaidinsäure, Ölsäure, Elaidinsäure, Linolsäure, Linolensäure, Linolelaidinsäure, Linolenelaidinsäure, Eleostearinsäure, Gadoleinsäure, Arachidonsäure, Erucasäure, Brassylsäure, Clupanodonsäure, sowie die aus natürlichen Quellen stammenden Mischungen von derartigen Fettsäuren, wie Leinölfettsäure, Sojaölfettsäure, Erdnußölfettsäure, Sonnenblumenölfettsäure, Rapsölfettsäure und isomerisierte natürliche Fettsäuregemische wie Conjuvandolfettsäure.

Geeignete Komponenten **B2** sind olefinisch ungesättigte Monomere ausgewählt aus olefinisch ungesättigten Carbonsäuren wie Acrylsäure, Methacrylsäure, Vinylessigsäure, Crotonsäure sowie olefinisch ungesättigten Dicarbonsäuren wie Maleinsäure, Fumarsäure, Itaconsäure und deren Halbestern mit linearen oder verzweigten Alkanolen mit 1 bis 8 Kohlenstoffatomen, Ester der genannten Säuren mit linearen oder verzweigten Alkanolen mit 1 bis 8 Kohlenstoffatomen wie Methyl(meth)-acrylat, Äthyl(meth)acrylat, die isomeren Butyl(meth)acrylate und 2-Äthylhexyl(meth)acrylat, Halbester von Alkandiolen mit 2 bis 8 Kohlenstoffatomen wie 2-Hydroxyäthyl(meth)acrylat, die isomeren Hydroxypropyl(meth)acrylate und 4-Hydroxybutyl(meth)acrylat. Dabei soll bevorzugt mindestens ein Massenanteil von 30 %, besonders bevorzugt mindestens 45 % der Monomeren **B2** mindestens eine Carboxylgruppe tragen.

Geeignete Komponenten **B3** sind insbesondere 1,2-, 1,3- und 1,4-Cyclohexandicarbonsäure, Tetrahydrophthalsäure, sowie die Anhydride von 1,2-Cyclohexandicarbonsäure und Tetrahydrophthalsäure.

Geeignete Komponenten **B4** sind neben den unter **B1** genannten auch gesättigte Fettsäuren wie Capronsäure, Caprinsäure, Önanthsäure, Myristinsäure, Laurinsäure, Palmitinsäure, Stearinsäure, Behensäure und Lignocerinsäure, sowie natürlich vorkommende Mischungen, die vorwiegend gesättigte Fettsäuren enthalten, wie Kokosnußölfettsäure.

Geeignete Komponenten **B5** sind lineare aliphatische mehrwertige Alkohole mit mindestens drei, bevorzugt mindestens vier Kohlenstoffatomen, insbesondere die als "Zuckeralkohole" bekannten Erythrit, Threit, Xylit, Arabit, Mannit und Sorbit.

Es wurde gefunden, daß bei der beispielsweise aus AT-B 369 774 bekannten Verwendung von verzweigten Alkoholen wie Pentaerythrit, selbst in Kombination mit cycloaliphatischen Dicarbonsäuren wie Tetrahydrophthalsäure ungünstigere anwendungstechnische Eigenschaften erzielt wurden als bei der erfindungsgemäßen Verwendung der Kombination linearer aliphatischer Alkohole **B5** mit den cycloaliphatischen Dicarbonsäuren **B3** oder deren Anhydriden. Es ist daher bevorzugt, daß die linearen aliphatischen Alkohole **B5** mindestens 50 % der Masse aller solchen hydroxyfunktionellen Bausteine des Alkydharzes **B** ausmachen, die mindestens zwei Hydroxylgruppen aufweisen. Besonders bevorzugt beträgt ihr Massenanteil mindestens 70 %, und insbesondere mindestens 90 %.

Das Urethanalkydharz **A** enthält Bausteine abgeleitet von ungesättigten Fettsäuren **A1**, aliphatischen oder aromatischen oder aromatisch-aliphatischen Monocarbonsäuren **A2**, die frei von olefinischen Doppelbindungen sind, cycloaliphatische Dicarbonsäuren **A3** oder deren Anhydride, mindestens dreiwertigen, bevorzugt mindestens vierwertigen Alkoholen **A4**, und aromatischen oder aliphatischen mehrfunktionellen, insbesondere difunktionellen Isocyanaten **A5**. Das Urethanalkydharz wird bevorzugt in einer zweistufigen Reaktion hergestellt, wobei in der ersten Stufe die Komponenten **A1** bis **A4** verestert werden, wobei die Säurezahl des Produkts der ersten Stufe bevorzugt maximal 10 mg/g, besonders bevorzugt maximal 5 mg/g beträgt. In der zweiten Stufe wird das Hydroxylgruppen enthaltende Produkt der ersten Stufe unter Zugabe einer geringen Menge (bis zu 1 % der Masse des Produkts der ersten Stufe, bevorzugt bis zu 0,5 % von dessen Masse) eines tertiären Amins mit dem Isocyanat **A5** umgesetzt, unter Molekülvergrößerung. Die erfindungsgemäßen Urethanalkydharze weisen bevorzugt einen Staudinger-Index, gemessen in Chloroform bei 23 °C von mindestens 9 cm³/g , bevorzugt mindestens von 11 cm³/g auf.

Geeignete Komponenten **A1** sind Fettsäuren mit 10 bis 40, bevorzugt 12 bis 30 Kohlenstoffatomen, die mindestens eine olefinische Doppelbindung aufweisen, wie Myristoleinsäure, Palmitoleinsäure, Petroselinsäure, Petroselaidinsäure, Ölsäure, Elaidinsäure, Linolsäure, Linolensäure, Linolelaidinsäure, Linolenelaidinsäure, Eleostearinsäure, Gadoleinsäure, Arachidonsäure, Erucasäure, Brassylsäure, Clupanodonsäure, sowie die aus natürlichen Quellen stammenden Mischungen von derartigen Fettsäure, wie Leinölfettsäure, Sojaölfettsäure, Erdnußölfettsäure, Sonnenblumenölfettsäure, Rapsölfettsäure, und isomerisierte natürliche Fettsäuregemische wie Conjuvandolfettsäure.

Geeignete Komponenten **A2** sind aliphatische lineare oder verzweigte Monocarbonsäuren mit 8 bis 20 Kohlenstoffatomen, wie beispielsweise 2-Äthylhexansäure, 2,2-Dimethyloctansäure, Myristinsäure, Palmitinsäure und Stearinsäure, aromatische Monocarbonsäuren wie Benzoesäure, und gemischt aromatisch-aliphatische Monocarbonsäuren wie p-tert.-Butylbenzoesäure und Phenylessigsäure.

Geeignete Komponenten **A3** sind insbesondere 1,2-, 1,3- und 1,4-Cyclohexandicarbonsäure, Tetrahydrophthalsäure, sowie die Anhydride von 1,2-Cyclohexandicarbonsäure und Tetrahydrophthalsäure.

Geeignete Komponenten **A4** sind lineare aliphatische mehrwertige Alkohole mit mindestens drei, bevorzugt mindestens vier Kohlenstoffatomen, insbesondere die als "Zuckeralkohole" bekannten Erythrit, Threit, Xylit, Arabit, Mannit und Sorbit.

Geeignete Komponenten **A5** sind aromatische oder aliphatische mehrfunktionelle Isocyanate mit mindestens zwei Isocyanatgruppen. Bevorzugt werden insbesondere 2,4- und 2,6-Toluylendüsocyanat sowie deren technische Gemische, Bis-(4-isocyanatophenyl)methan, Isophorondiisocyanat, Bis-(4-isocyanatocyclohexyl)methan und 1,6-Diisocyanatohexan, und die von diesen abgeleiteten Isocyanurate, Allophanate und Biurete.

Bei den Untersuchungen, die der Erfindung zugrundelagen, wurde überraschenderweise festgestellt, daß sich durch die Verwendung von Zuckeralkoholen als Komponente **B5** und **A4** besonders gute Verträglichkeiten zwischen den Harzen **A** und **B** ergeben, die zu niedrigen Viskositäten der Mischungen führen. Ebenfalls überraschenderweise wurde eine Verbesserung des Glanzes beobachtet, wenn Zuckeralkohole mit mindestens vier Kohlenstoffatomen als Komponente A5 und B4 eingesetzt wurden.

Die Verwendung von cycloaliphatischen Dicarbonsäuren führte zu gegenüber aromatischen Dicarbonsäuren zu verbesserter Verseifungsbeständigkeit des Urethanalkyds und zu einer verbesserten Emulgierbarkeit. Es war auch nicht zu erwarten gewesen, daß durch die Verwendung der cycloaliphatische Dicarbonsäuren sich bei ansonsten gleichen anwendungstechnischen Eigenschaften der Ölgehalt herabsetzen ließ, und dadurch eine erhöhte Härte und eine schnellere Trocknung der Beschichtungen ermöglicht wurden.

Emulsionen enthaltend die wasserverdünnbaren Alkydharz-Zusammensetzungen **AB** lassen sich herstellen, indem die Harze **A** und **B** bevorzugt bei erhöhter Temperatur gemischt werden, gegebenenfalls Lösungsmittel durch Destillation unter vermindertem Druck mindestens teilweise entfernt wird, und die Mischung nach Zusatz eines Neutralisationsmittels für das Trägerharz **B** bei einer Temperatur von 60 °C bis 100 °C durch Zugabe von Wasser und bevorzugt unter guter Durchmischung in eine Emulsion überführt wird. Als Neutralisationsmittel eignen sich insbesondere tertiäre Amine wie Triäthylamin oder Triäthanolamin.

Die Beschichtungen, die mit Hilfe der wasserverdünnbaren Alkydharz-Zusammensetzungen **AB** hergestellt werden, zeichnen sich durch hohen Glanz, gute Schwitzwasserbeständigkeit und hohe Härte aus.

### Beispiele

### Beispiel 1 Alkydharz-Vorstufe 1

394 g Sojaölfettsäure, 183 g para-tert.Butylbenzoesäure, 169 g Tetrahydrophthalsäureanhyerid, 423 g einer Lösung von Sorbit in Wasser (70 g Sorbit in 100 g Lösung) und 66 g Pentaerythrit wurden gemeinsam mit 100 g Xylol auf 230 °C aufgeheizt, das Wasser aus der Sorbitlösung und der Veresterung wurde azeotrop abdestilliert und das abgetrennte Xylol wurde zurückgeführt. Nachdem die Säurezahl in der Reaktionsmischung auf unter 5 mg/g abgefallen war (ca. acht Stunden) wurde die Reaktion abgebrochen. Durch Zusatz von Xylol wurde auf einen Festkörper-Massenanteil von 80 % verdünnt. Diese Lösung wies eine dynamische Viskosität bei 23 °C von ca. 3000 mPa·s auf.

### Beispiel 2 Urethanalkyd-Harz 1

106,3 g der Alkydharz-Vorstufe aus Beispiel 1 wurden mit 40 g Xylol verdünnt, dazu wurden 0,3 g Triäthylamin gegeben. Die Mischung wurde unter Rühren auf 80 °C erwärmt, dann wurden 15 g einer technischen Isomerenmischung von Toluylendüsocyanat zugefügt, die erhaltene Mischung wurde innerhalb von einer Stunde auf 95 °C erwärmt. Die Reaktionsmischung wurde bei dieser Temperatur unter Rühren gehalten, bis ein Massenanteil an freien Isocyanatgruppen von unter 0,02 % erreicht war (vier Stunden). Eine der Reaktionsmischung entnommene Probe wies einen Staudinger-Index von ca. 12 cm³/g auf (gemessen in Chloroform bei 23 °C). Durch Zusatz von Xylol wurde auf einen Festkörper-Massenanteil von 55 % eingestellt. Diese Lösung wies eine dynamische Viskosität bei 23 °C von ca. 70 mPa·s auf.

### Beispiel 3 Trägerharz 1

165 g Leinölfettsäure wurden auf 140 °C unter einem Stickstoffschleier aufgeheizt. Innerhalb von fünf Stunden wurde eine Mischung von 150 g Isobutylmethacrylat und 81 g Methacrylsäure zugetropft, gleichzeitig wurden 8 g Di-tert.Butylperoxid getrennt von der Monomerenmischung zugegeben. Nach beendeter Zugabe wurde die Reaktionsmischung weitere sechs Stunden bei 140 °C gehalten, bis ein Festkörper-Massenanteil von über 98 % erreicht war. Dann wurden 173 g Tetrahydrophthalsäureanhydrid, 240 g Sojaölfettsäure und 385 g einer Lösung von Sorbit in Wasser (70 g Sorbit in 100 g der Lösung) zugefügt. Nach Zugabe von 100 g Xylol wurde auf 220 °C aufgeheizt, unter Kreislaufdestillation wurde das Wasser abgetrennt und das Xylol zurückgeführt. Nach Erreichen einer Säurezahl von 55 mg/g und eines Staudinger-Index von 12 cm³/g wurde die Reaktionsmischung auf Zimmertemperatur abgekühlt und durch Zusatz von Xylol auf einen Festkörper-Massenanteil von 65 % verdünnt.

### Beispiel 4 Emulsion 1

108,8 g des Urethanalkyd-Harzes aus Beispiel 2 und 61, 5 g des Trägerharzes aus Beispiel 3 wurden gemeinsam auf 120 °C aufgeheizt. Ca. 67 g Xylol wurden durch Destillation unter vermindertem Druck (ca. 100 hPa) abgetrennt. Die erhaltene Mischung wurde auf 90 °C abgekühlt, 2,2 g einer wäßrigen Lösung von Ammoniak (25 g in 100 g der Lösung) wurden zugefügt, im Verlauf von zwei Stunden wurden 107,3 g voll entsalztes Wasser bei ca. 80 °C zugetropft. Dabei wurde eine Emulsion mit einem Festkörper-Massenanteil von 47 %, einer dynamischen Viskosität von ca. 6000 mPa·s bei 23 °C und einem Schergefälle von 10 s⁻¹ sowie einem pH-Wert von 8,6 (verdünnt in weiterem Wasser zu einem Festkörper-Massenanteil von 10 %) erhalten.

### Beispiel 5 Alkydharz-Vorstufe 2

425 g Sojaölfettsäure, 175 g para-tert.Butylbenzoesäure, 108 g Tetrahydrophthalsäureanhydrid, 405 g einer Lösung von Sorbit in Wasser (70 g Sorbit in 100 g Lösung), 51 g Adipinsäure und 70 g Pentaerythrit wurden gemeinsam mit 100 g Xylol auf 230 °C aufgeheizt, das Wasser aus der Sorbitlösung und der Veresterung wurde azeotrop abdestilliert und das abgetrennte Xylol wurde zurückgeführt. Nachdem die Säurezahl in der Reaktionsmischung auf unter 5 mg/g abgefallen war (nach ca. acht Stunden), wurde die Reaktion abgebrochen. Durch Zusatz von Xylol wurde auf einen Festkörper-Massenanteil von 80 % verdünnt. Diese Lösung wies eine dynamische Viskosität bei 23 °C von ca. 2500 mPa·s auf.

### Beispiel 6 Urethanalkyd-Harz 2

103,5 g der Alkydharz-Vorstufe aus Beispiel 5 wurden mit 40 g Xylol verdünnt, dazu wurden 0,3 g Triäthylamin gegeben. Die Mischung wurde unter Rühren auf 80 °C erwärmt, dann wurden 16 g Isophorondiisocyanat zugefügt, die erhaltene Mischung wurde innerhalb von einer Stunde auf 95 °C erwärmt. Die Reaktionsmischung wurde bei dieser Temperatur unter Rühren gehalten, bis ein Massenanteil an freien Isocyanatgruppen von unter 0,02 % erreicht war (vier Stunden). Eine der Reaktionsmischung entnommene Probe wies einen Staudinger-Index von ca. 12 cm³/g auf (gemessen in Chloroform bei 23 °C). Durch Zusatz von Xylol wurde auf einen Festkörper-Massenanteil von 55 % eingestellt. Diese Lösung wies eine dynamische Viskosität bei 23 °C von ca. 45 mPa·s auf.

### Beispiel 7 Emulsion 2

109,2 g des Urethanalkyd-Harzes aus Beispiel 6 und 61, 5 g des Trägerharzes aus Beispiel 3 wurden gemeinsam auf 120 °C aufgeheizt. Ca. 67 g Xylol wurden durch Destillation unter vermindertem Druck (ca. 100 hPa) abgetrennt. Die erhaltene Mischung wurde auf 90 °C abgekühlt, 4 g Triäthylamin wurden zugefügt, im Verlauf von zwei Stunden wurden 105,1 g voll entsalztes Wasser bei ca. 80 °C zugetropft. Dabei wurde eine Emulsion mit einem Festkörper-Massenanteil von 47 %, einer dynamischen Viskosität von ca. 2500 mPa·s bei 23 °C und einem Schergefälle von 10 s⁻¹ sowie einem pH-Wert von 8,9 (verdünnt in weiterem Wasser zu einem Festkörper-Massenanteil von 10 %) erhalten.

### Beispiel 8 wasserverdünnbare Grundierung

51,7 g der Emulsion 1 aus Beispiel 4, 0,2 g Aminomethylpropanol, 1,5 g eines Trockners (gemischtes Octoat von Kobalt, Barium und Zirkon), 0,4 g 2-Butanonoxim, 9,1 g eines roten Eisenoxidpigments, 10,6 g Zinkphosphatpigment, 7,6 g Talkum und 6,6 g gemahlene Kreide wurden unter Zusatz von 0,9 g eines Antiabsetzmittels und 0,6 g eines Entschäumers gemischt und während einer Stunde auf einer Perlmühle verrieben. Dann wurden 0,8 g einer Lösung von einem Urethanverdicker (4 g des Verdickers in 100 g der wäßrigen Lösung) und 10 g voll entsalztes Wasser zugegeben.

Der Lack wurde mit einer Schichtdicke (naß) von 150 µm auf ein kaltgewalztes Stahlblech aufgetragen. Die Schicht hatte eine Klebfreizeit von 25 Minuten und war nach 24 Stunden vollständig durchgetrocknet. Die Pendelhärte (DIN EN ISO 7253) betrug nach 24 Stunden 46 s, nach 5 Tagen 83 s. Im Tropentest nach DIN 50 017 ergab sich eine Bewertung von "m1g1" (Blasengrad, DIN 53 209). Im Salzsprühtest (DIN EN ISO 7253, 300 µm Naßfilmstärke, 1 Woche Trocknung, 240 Stunden Testzeit) ergab sich eine Bewertung von "m2g1". Die Unterrostung am Schnitt betrug 0,3 cm.

### Vergleichsbeispiel 8

Gemäß dem Beispiel 3 auf Seite 13 der AT-B 369 774 wurde eine Korrosionsschutzgrundierung hergestellt aus 55,5 g der Emulsion 3 nach Tabelle 5, 12,5 g Eisenoxidrotpigment, 12,5 g Bleisilicochromat, 17,5 g Bariumsulfat und 7,5 g Talkum durch Verreiben auf einer Perlmühle während einer Stunde. Nach Zusatz von 0,9 g eines Antiabsetzmittels und 0,6 g eines Entschäumers wurde durch Zugabe von Wasser auf eine Viskostät von ca. 4 mPa·s verdünnt und durch Zusatz von Triäthylamin auf einen pH-Wert von 9,2 eingestellt.

Der Lack wurde mit einer Naßschichtdicke von 150 µm auf ein kaltgewalztes Stahlblech aufgetragen. Die Klebfrei-Trocknungszeit betrug ca. 30 Minuten; nach 24 Stunden war die Beschichtung vollständig durchgetrockent.

Im Tropentest nach DIN 50 017 ergab sich eine Bewertung von "m2g2" (Blasengrad, DIN 53 209). Im Salzsprühtest (DIN EN ISO 7253, 300 µm Naßfilmstärke, 1 Woche Trocknung, 240 Stunden Testzeit) ergab sich eine Bewertung von "m2g2". Die Unterrostung am Schnitt betrug 0,6 cm.

### Beispiel 9 wasserverdünnbarer Decklack

Zunächst wurden 5,8 g voll entsalztes Wasser, 1,2 g eines nichtionischen Dispergiermittels (polyäthermodifiziertes Acrylat, 50 g des Wirkstoffs in 100 g der wäßrigen Lösung), 25 g eines Titandioxidpigments (Rutiltyp, 94 % TiO₂), 1,8 g eines Verdickers (4 g in 100 g der wäßrigen Lösung), 0,3 g Aminomethylpropanol und 0,6 g eines Mineralöl-Entschäumers vermischt und auf einer Perlmühle während einer Stunde verrieben.

58,5 g der Emulsion 2 aus Beispiel 7, 1,5 g eines Trockners (gemischtes Octoat von Kobalt, Barium und Zirkon), 0,4 g 2-Butanonoxim, wurden unter Zusatz von 0,9 g eines Silikonöls (10 g des Öls in 100 g einer xylolischen Lösung) als Slipmittel gemischt und zu der oben beschriebenen Mischung auf der Perlmühle gegeben.

### Vergleichsbeispiel 9

Entsprechend dem Beispiel 9 wurde ein Decklack hergstellt, wobei anstelle der Emulsion 2 aus Beispiel 7 die Emulsion gemäß Beispiel 3 der Tabelle 5 der AT-B 369 774 eingesetzt wurde.

### Beispiel 10 Prüfung der Decklacke gemäß Beispiel 9 und Vergleichsbeispiel 9

Die so hergestellten Decklacke wurden mit einer Schichtdicke (naß) von 80 µm auf phosphatierte Stahlbleche aufgetragen. Die Schicht bei dem Lack gemäß Beispiel 9 hatte eine Klebfreizeit von 25 Minuten und war nach 24 Stunden vollständig durchgetrocknet. Die Pendelhärte (DIN EN ISO 7253) betrug für den Lack des Beispiels 9 nach 24 Stunden 26 s, nach 3 Tagen 46 s, und nach 7 Tagen 68 s, im Fall des Vergleichlacks (Vergleichsbeispiel 9) waren die entsprechenden Werte 22 s, 35 s und 50 s. In einem Schnellbewitterungstest ("QUV/Klimatest", ISO 4892-2) wurde der Abfall des Glanzes unter einem Winkel von 60° gemessen:

**Tabelle**

| Glanzabfall in einem Decklack gemäß Beispiel 9 und Vergleichsbeispiel 9 | | |
|---|---|---|
| Zeit | Beispiel 9 | Vergleichsbeispiel 9 |
| Ausgangswert | 89 | 75 |
| 144 Stunden | 82 | 70 |
| 240 Stunden | 80 | 65 |
| 500 Stunden | 76 | 40 |

Der Decklack mit dem erfindungsgemäßen Harz hatte einen besseren Glanz und einen geringeren Glanzabfall gegenüber dem Decklack gemäß dem Stand der Technik; die Trocknung verlief schneller und ergab höhere Werte für die Pendelhärte als bei Decklacken gemäß dem Stand der Technik.

## Patentansprüche

1. Wasserverdünnbare Alkydharz-Zusammensetzung **AB,** enthaltend ein allein nicht wasserlösliches Urethanalkyd-Harz **A** mit einem Ölgehalt von weniger als 50 % und ein mit olefinisch ungesättigten Monomeren gepfropftes Alkydharz **B** als Trägerharz, **dadurch gekennzeichnet, daß** das Alkydharz **B** Bausteine enthält abgeleitet von linearen aliphatischen mindestens dreiwertigen Alkoholen **B5** und von cycloaliphatischen Dicarbonsäuren **B3** oder deren Anhydriden.

2. Wasserverdünnbare Alkydharz-Zusammensetzung **AB** nach Anspruch 1, **dadurch gekennzeichnet, daß** der Massenanteil des Urethanalkydharzes in der Zusammensetzung 80 % bis 40 %, und der Massenanteil des Trägerharzes **B** 20% bis 60 % beträgt.

3. Wasserverdünnbare Alkydharz-Zusammensetzung **AB** nach Anspruch 1, **dadurch gekennzeichnet, daß** das Trägerharz **B** Bausteine abgeleitet von ungesättigten Fettsäuren **B1**, von einer Mischung von Acrylmonomeren **B2**, von cycloaliphatischen Dicarbonsäuren **B3** oder deren Anhydriden und von mindestens dreiwertigen linearen aliphatischen Alkoholen **B5** enthält.

4. Wasserverdünnbare Alkydharz-Zusammensetzung **AB** nach Anspruch 3, **dadurch gekennzeichnet, daß** mindestens ein Massenanteil von 30 % der Monomeren **B2** mindestens eine Carboxylgruppe trägt.

5. Wasserverdünnbare Alkydharz-Zusammensetzung **AB** nach Anspruch 3, **dadurch gekennzeichnet, daß** die mindestens dreiwertigen aliphatischen Alkohole **B5** ausgewählt sind aus den Zuckeralkoholen Erythrit, Threit, Xylit, Arabit, Mannit und Sorbit.

6. Wasserverdünnbare Alkydharz-Zusammensetzung **AB** nach Anspruch 1, **dadurch gekennzeichnet, daß** das Urethanalkydharz **A** einen Staudinger-Index von mindestens 9 cm³/g aufweist, gemessen in Chloroform bei 23 °C.

7. Wasserverdünnbare Alkydharz-Zusammensetzung **AB** nach Anspruch 1, **dadurch gekennzeichnet, daß** sowohl das Urethanalkydharz **A** als auch das Trägerharz **B** Bausteine abgeleitet von linearen aliphatischen mindestens dreiwertigen Alkoholen enthalten, wobei diese unabhängig voneinander ausgewählt sind aus den Zuckeralkoholen Erythrit, Threit, Xylit, Arabit, Mannit und Sorbit.

8. Wasserverdünnbare Alkydharz-Zusammensetzung **AB** nach Anspruch 1, **dadurch gekennzeichnet, daß** sowohl das Urethanalkydharz **A** als auch das Trägerharz **B** Bausteine abgeleitet von linearen aliphatischen mindestens vierwertigen Alkoholen enthalten.

9. Verfahren zur Herstellung von wasserverdünnbaren Alkydharz-Zusammensetzungen **AB, dadurch gekennzeichnet, daß** das Urethanalkydharz **A** in einer zweistufigen Reaktion hergestellt wird, wobei in der ersten Stufe ungesättigte Fettsäuren **A1**, aliphatische oder aromatische oder aliphatisch-aromatische Monocarbonsäuren **A2,** die frei von olefinischen Doppelbindungen sind, cycloaliphatische Dicarbonsäuren **A3** oder deren Anhydride und mindestens dreiwertige Alkohole **A4** verestert werden, und das Produkt der ersten Stufe unter Zugabe einer geringen Menge eines tertiären Amins mit einem Isocyanat **A5** umgesetzt wird, und daß das Urethanalkydharz **A** anschließend mit dem Trägerharz **B** gemischt wird.

10. Verfahren zur Herstellung von wäßrigen Emulsionen von wasserverdünnbaren Alkydharz-Zusammensetzungen **AB,** umfassend die Schritte des Anspruchs 9, wobei anschließend die Mischung auf eine Temperatur von 60 °C bis 100 °C aufgeheizt wird, und nach Zusatz eines Neutralisierungsmittels für das Trägerharz **B** durch Zugabe von Wasser in eine Emulsion überführt wird.

11. Verwendung von wäßrigen Emulsionen von wasserverdünnbaren Alkydharz-Zusammensetzungen **AB** zur Herstellung von Beschichtungen mit hohem Glanz, guter Schwitzwasserbeständigkeit und hoher Härte.
